# EUROPÄISCHE PATENTSCHRIFT

(11) **EP 3 269 532 B1**
(45) Veröffentlichungstag und Bekanntmachung des Hinweises auf die Patenterteilung: **22.05.2019**
(21) Anmeldenummer: 17177178.5
(22) Anmeldetag: 21.06.2017
(51) Int. Cl.: B29C 65/02, B29C 65/48

(54) **VERFAHREN ZUM FÜGEN ZWEIER FASERVERBUND-FÜGEPARTNER**
METHOD FOR JOINING TWO FIBRE COMPOSITE JOINING PARTNERS
PROCÉDÉ D'ASSEMBLAGE DE DEUX PIÈCES À JOINDRE EN COMPOSITE CHARGÉ DE FIBRES

(30) Priorität: 24.06.2016 DE 102016111635
(43) Veröffentlichungstag der Anmeldung: 17.01.2018
(73) Patentinhaber: Deutsches Zentrum für Luft- und Raumfahrt e.V., 51147 Köln (DE)
(72) Erfinder: Schmidt, Jochen, 38110 Braunschweig (DE); Kleineberg, Dr. Markus, 30966 Hemmingen (DE)
(74) Vertreter: Gramm, Lins & Partner Patent- und Rechtsanwälte PartGmbB

(56) Entgegenhaltungen:
- US-A1- 2010 124 659
- Karen Mason: "Monitoring the cure itself : CompositesWorld", , 9. Januar 2006 (2006-01-09), XP055431786, Gefunden im Internet: URL:https://www.compositesworld.com/articl es/monitoring-the-cure-itself [gefunden am 2017-12-04]

## Beschreibung

Die Erfindung betrifft ein Verfahren zum Fügen eines ersten Faserverbund-Fügepartners an wenigstens einen zweiten Faserverbund-Fügepartner mittels einer Klebverbindung, wobei der erste und der zweite Faserverbund-Fügepartner einen Faserverbundwerkstoff aufweisen oder aus einem solchen bestehen und die Klebverbindung durch einen unter Temperaturbeaufschlagung vernetzbaren bzw. aushärtbaren Klebwerkstoff gebildet wird.

Der Einsatz von Faserverbundwerkstoffen vereint die Eigenschaft einer hohen Festigkeit und Steifigkeit eines Bauteils mit einem sehr niedrigen Gewicht. Der Einsatz derartiger Werkstoffe ist daher unter dem Aspekt des Leichtbaus besonders vorteilhaft. Allerdings ist die hohe gewichtsspezifische Festigkeit und Steifigkeit des Werkstoffes richtungsabhängig, sodass bei Bauteilen, die eine hohe Festigkeit und Steifigkeit in mehrere verschiedene Richtungen aufweisen müssen, komplexe Strukturen entstehen, die nicht selten aus mehreren Einzelteilen zusammengesetzt werden müssen.

Faserverbundwerkstoffe weisen dabei in der Regel zwei verschiedene Komponenten auf: a) den Faserwerkstoff bzw. das Fasermaterial und b) das Matrixmaterial.

Das Fasermaterial bzw. der Faserwerkstoff wird dabei von dem Matrixmaterial umschlossen und bildet so beim Aushärten (es wird auch von Vernetzung bzw. Polymerisation gesprochen) des Matrixmaterials, bei dem das Matrixmaterial seine spezifische Festigkeit und Steifigkeit erhält, eine integrale Einheit. Als Fasermaterial kommen dabei insbesondere Kohlenstofffasern und Glasfasern in Betracht.

Die verwendeten Matrixmaterialien sind in der Regel Kunststoffe, wie bspw. Epoxidharz, oder allgemeiner thermoplastische oder duroplastische Kunststoffe. Durch Temperierung dieser Matrixmaterialien wird eine chemische Vernetzungsreaktion beschleunigt, die dazu führt, dass das Matrixmaterial polymerisiert und somit aushärtet und die darin eingebetteten Fasern des Fasermaterials in die entsprechende Form zwingt. Während duroplastische Kunststoffe nach dem Aushärten ihre feste Form auch unter Wärmeeintrag behalten, können thermoplastische Kunststoffe bei Überschreiten einer vorgegebenen Temperatur wieder aufgeschmolzen werden.

Um die bereits angesprochenen komplexen Bauteilstrukturen zu erreichen, werden in der Praxis nicht selten mehrere verschiedene Elemente zu einem großen Bauteil zusammengefügt. Kraft- bzw. formschlüssige Verbindungen, wie bspw. Verschraubungen oder das Vernieten von Bauteilen, ist je nach Einsatzzweck des herzustellenden Faserverbundbauteils nur bedingt einsetzbar, da eine derartige Fügetechnik immer einhergeht mit einer lokalen Zerstörung der Fasern des in das Matrixmaterial eingebetteten Fasermaterials, was dazu führt, dass die Steifigkeit und Festigkeit des Faserverbundbauteils nicht mehr den vorgegebenen Qualitätsbedingungen entspricht.

Des Weiteren weisen Faserverbundbauteile in der Regel fertigungsbedingte Formabweichungen auf, was zu Problemen bei der Montage dieser Bauteile zu einer übergeordneten Bauteilgruppe führen kann, insbesondere dann, wenn form- bzw. kraftschlüssige Verbindungstechniken eingesetzt werden. So ist aus der DE 10 2014 100 780 A1 bspw. ein Faserverbundmontageverfahren bekannt, bei dem das fertig hergestellte Faserverbundbauteil in einer Verformungseinrichtung eingespannt und so verformt wird, dass es mit dem zweiten Fügepartner im Fügebereich in Deckung gebracht werden kann. Allerdings wird hierbei in Kauf genommen, dass die Bauteile unter einer gewissen Krafteinwirkung und Spannung miteinander verbunden sind.

Eine weitere Fügetechnik bei der Herstellung komplexer Faserverbundbauteile ist das Verkleben bzw. die Verklebung von Faserverbundkomponenten. Aus der Praxis sind hierbei im Wesentlichen drei verschiedene klebende Fügeverfahren bekannt. Bei dem sogenannten Co-Curing werden zwei vollständig unvernetzte und damit geometrisch flexible Faserverbund-Fügepartner mittels einer Klebschicht verbunden und anschließend gemeinsam ausgehärtet. Nachteil hierbei ist, dass beide Fügepartner geometrisch sehr instabil sind, sodass für den gesamten Prozess wenigstens zwei formgebende Werkzeuge notwendig sind. Zusätzlich wird eine Vorrichtung benötigt, die diese beiden formgebenden Werkzeuge zueinander ausrichtet. Eine Qualitätskontrolle kann in Bezug auf die Eigenschaften der Einzelkomponenten erst nach Prozessende erfolgen, d.h. im Fehlerfall müssen beide Komponenten ersetzt werden.
Ein Verfahren zum Fügen zweier teilvernetzter Faserverbund-Fügepartner ist aus US2010124659 A1 bekannt.

Ein weiteres Fügeverfahren stellt das sogenannte Co-Bonding dar, bei dem einer der Fügepartner vollständig unvernetzt ist, während der andere Fügepartner vollständig vernetzt und somit ausgehärtet ist. Für den flexiblen, unvernetzten Fügepartner ist dabei in der Regel auch ein Formwerkzeug notwendig, wobei auch dieses mit Hilfe einer Positioniereinrichtung relativ zum ausgehärteten Fügepartner positioniert werden muss. Eine Qualitätskontrolle am unvernetzten Fügepartner kann erst nach dem Fügeprozess erfolgen.

Bei dem dritten Fügeverfahren, dem sogenannten Secondary Bonding, werden zwei vollständig vernetzte Bauteile, d.h. zwei starre, ausgehärtete Bauteile, über eine Klebverbindung miteinander verbunden, wobei der Nachteil hierbei besteht, dass die Klebverbindung weniger leistungsfähig ist, da sie kein Polymernetzwerk zu den Fügepartnern ausbildet. Der entscheidende Nachteil ist jedoch, dass im Fügeprozess keine geometrischen Abweichungen der Fügepartner ausgeglichen werden können, die sich direkt auf eine ungleichmäßige Wandstärke der Klebschicht auswirken. Mit anderen Worten, ein wesentliches Qualitätskriterium für eine tragfähige Klebverbindung, nämlich die Einstellung einer vorgegebenen bzw. vordefinierten Wandstärke der Klebverbindung, kann während des Fügeprozesses nicht beeinflusst werden.

Bei der Bewertung der mechanischen Leistungsfähigkeit von Verklebungen von Faserverbundkomponenten spielt die Wandstärke des Klebespaltes jedoch eine entscheidende Rolle. Die Einstellung dieses Klebespaltes während des Prozesses auf eine gleichmäßige, vorher definierte Wandstärke hat sich insbesondere bei der Verklebung toleranzbehafteter Faserverbundkomponenten als problematisch und sehr aufwendig herausgestellt.

Es ist daher Aufgabe der vorliegenden Erfindung, ein verbessertes Verfahren zum Fügen zweier Faserverbund-Fügepartner anzugeben, mit dem die Eigenschaften des Klebespaltes hinsichtlich der Wandstärke während des Verklebens der beiden Fügepartner beeinflusst werden kann.

Die Aufgabe wird mit dem Verfahren gemäß Anspruch 1 erfindungsgemäß gelöst.

Gattungsgemäß beansprucht Patentanspruch 1 ein Verfahren zum Fügen eines ersten Faserverbund-Fügepartners an wenigstens einen zweiten Faserverbund-Fügepartner mittels einer Klebverbindung, wobei der erste und der zweite Faserverbund-Fügepartner einen Faserverbundwerkstoff aufweisen oder aus einem solchen bestehen und die Klebverbindung durch einen unter Temperaturbeaufschlagung vernetzbaren Klebwerkstoff gebildet wird.

Dabei wird zumindest der erste Faserverbund-Fügepartner so bereitgestellt, dass das Matrixmaterial des ersten Faserverbund-Fügepartners teilvernetzt ist. Teilvernetzt meint hierbei, dass der Vernetzungsgrad der Vernetzungsreaktion über 50 % liegt und die Vernetzungsreaktion somit schon teilweise begonnen hat. Der zweite Faserverbund-Fügepartner wird dabei vorteilhafterweise so bereitgestellt, dass das Matrixmaterial des zweiten Faserverbund-Fügepartners bereits ausgehärtet ist, d.h. vollständig vernetzt ist.

Anschließend wird zwischen den beiden Faserverbund-Fügepartnern in einem Fügespalt ein Klebwerkstoff eingebracht, sodass die beiden Faserverbund-Fügepartner über den in den Fügespalt eingebrachten Klebwerkstoff klebend miteinander verbunden werden können. Anschließend wird dann das aus den Faserverbund-Fügepartnern und dem Klebwerkstoff gebildete Faserverbundbauteil durch Temperierung mittels einer Temperiereinrichtung getempert, um zumindest das Matrixmaterial des ersten Faserverbund-Fügepartners und den Klebwerkstoff vollständig zu vernetzen.

Erfindungsgemäß ist dabei vorgesehen, dass während des Temperprozesses der Vernetzungsgrad des Matrixmaterials zumindest des ersten Faserverbund-Fügepartners mittels eines Sensorsystems erfasst und aus dem momentanen Vernetzungsgrad die aktuelle Glasübergangstemperatur des Matrixmaterials bestimmt wird und für einen ersten Zeitraum das gefügte Faserverbundbauteil in einem Bereich um die aktuelle Glasübertragungstemperatur derart temperiert wird, dass der erste Faserverbund-Fügepartner elastisch verformbar ist. Innerhalb dieses ersten Zeitraumes wird dann der erste Faserverbund-Fügepartner zur Einstellung einer vorgegebenen Stärke und gegebenenfalls Gleichmäßigkeit des Fügespaltes plastisch verformt, sodass die Eigenschaft des Fügespaltes hinsichtlich der Wandstärke des Fügespaltes während des Verklebens der beiden Fügepartner beeinflusst werden kann.

Dabei wurde erkannt, dass bei der Verwendung eines teilvernetzten Fügepartners eine Temperierung um den Bereich der Glasübergangstemperatur eine plastische Verformbarkeit des Faserverbundbauteils während des Fügeverfahrens möglich ist, mit der dann die vorgegebene Stärke und gegebenenfalls Gleichmäßigkeit des Fügespaltes eingestellt werden kann.

Unter dem Tempern des Faserverbundbauteils im Sinne der vorliegenden Erfindung wird insbesondere verstanden, dass das Faserverbundbauteil mittels einer Temperiereinrichtung über einen vorgegebenen oder vorgebbaren Zeitraum hinweg temperiert wird, wobei die Temperaturkurve über den Temperierzeitraum hinweg vorgegeben, vorgebbar und/oder regelbar ist.

Die Glasübergangstemperatur ist dabei die Temperatur, bei der das Matrixmaterial des Faserverbundwerkstoffes von einem im Wesentlichen festen Zustand, bei dem eine plastische Verformbarkeit des Fügepartners nicht gegeben ist, in einen im Wesentlichen schmelzartigen oder forminstabilen Zustand, bei dem eine plastische Verformbarkeit des Fügepartners gegeben ist, wechselt. Die Glasübergangstemperatur bezeichnet hierbei jedoch keinen Phasenübergang und ist insbesondere abhängig von der Temperatur des Bauteils und dem Vernetzungsgrad des Matrixmaterials. Daher ist es ganz besonders vorteilhaft, wenn sowohl die Ist-Temperatur als auch der Vernetzungsgrad mit Hilfe von Sensoren, für die Temperatur ein Thermosensor und für den Vernetzungsgrad bspw. dielektrische Sensoren oder Ultraschallsensoren, ermittelt wird, um so die Glasübertragungstemperatur des Matrixmaterials aus der Ist-Temperatur und dem Vernetzungsgrad ableiten zu können. Denn die Glasübergangstemperatur korreliert gerade bei Matrixmaterialien von Faserverbundwerkstoffen mehr oder weniger direkt mit dem Vernetzungsgrad des Matrixmaterials.

Darüber hinaus ist bei einem zu großen Überschreiten der Glasübergangstemperatur die Gefahr groß, dass aufgrund von Überhitzung des Matrixmaterials die Polymerketten des Matrixmaterials Schaden nehmen und so das gesamte Bauteil fehlerbehaftet ist. Daher ist erfindungsgemäß vorgesehen, dass in dem ersten Zeitraum das gefügte Faserverbundbauteil in einem Bereich um die aktuelle Glasübertragungstemperatur getempert wird, wobei dieser Bereich meint, dass die Temperatur des Temperprozesses dicht unter oder dicht über der aktuellen Glasübergangstemperatur liegt. Dicht über der aktuellen Glasübergangstemperatur meint hier vorzugsweise einen Bereich von maximal 10 Kelvin oberhalb der Glasübergangstemperatur, besonders vorzugsweise maximal 5 Kelvin über der Glasübergangstemperatur. Dicht unterhalb der Glasübertragungstemperatur meint hierbei, dass das Faserverbundbauteil so mit Hilfe des Temperprozesses temperiert wird, dass eine plastische Verformbarkeit gegeben ist, was in der Regel in einem Bereich von 15 Kelvin unter der aktuellen Glasübergangstemperatur gegeben ist, vorzugsweise 10 Kelvin unter der Glasübergangstemperatur, und besonders vorzugsweise 5 Kelvin unter der Glasübergangstemperatur.

Ein weiterer Vorteil der Erfindung ist, dass der Klebwerkstoff mit zumindest dem teilvernetzten Fügepartner noch ein Polymernetzwerk ausbilden kann, was die Festigkeit der Klebverbindung verbessert.

Am Vorteilhaftesten ist es, wenn das Bauteil so temperiert wird, dass die Glasübergangstemperatur möglichst dicht angenähert wird, ohne diese jedoch zu überschreiten, wodurch der Fügepartner im teilvernetzten Zustand plastisch verformbar ist, ohne jedoch seine Eigenstabilität gänzlich zu verlieren. Ein derartiger Regelungsprozess während des Temperprozesses lässt sich durch die Ermittlung des Vernetzungsgrades mit Hilfe von Sensoren, der aktuellen Ist-Temperatur und einer entsprechenden Steuerung der Temperiereinrichtung in Abhängigkeit des Vernetzungsgrades und der Ist-Temperatur realisieren.

Eine weiterer Vorteil des erfindungsgemäßen Verfahrens besteht darin, dass neben der Beeinflussung der Wandstärke des Klebespaltes auch ein Polymernetzwerk des Klebwerkstoffes mit dem anfänglich teilvernetzten Fügepartner hergestellt wird, wodurch die Klebverbindung stabiler und weniger anfällig für Beschädigungen wird.

In einer vorteilhaften Ausführungsform wird der erste Faserverbund-Fügepartner, dessen Matrixmaterial anfänglich teilvernetzt war, mit einer Verformungseinrichtung verbunden, wobei während des Temperprozesses innerhalb des ersten Zeitraumes mittels einer Spalterfassungsvorrichtung die Stärke des Fügespaltes erfasst und der erste Fügepartner mittels der verbundenen Verformungseinrichtung derart plastisch verformt wird, dass eine vorgegebene Stärke und ggf. Gleichmäßigkeit des Fügespaltes durch ein plastisches Verformen des Fügepartners mittels der Verformungseinrichtung eingestellt wird. Hierdurch wird es möglich, aktiv auf den Prozessparameter der Wandstärke des Klebespaltes einzuwirken und diesen während des Temperprozesses innerhalb des ersten Zeitraumes entsprechend einzustellen.

In einer vorteilhaften alternativen Ausführungsform wird auf eine aktive Verformungseinrichtung verzichtet und das gefügte Faserverbundbauteil in eine Vakuumeinrichtung, beispielsweise ein Foliensack, eingebracht und mittels einer Drucksenke evakuiert. In der Vakuumeinrichtung wird somit ein Vakuum bzw. Feinvakuum eingestellt, wodurch aufgrund des Umgebungsdruckes oder eines Autoklavdruckes, sofern das Bauteil in einen Autoklaven eingefahren wird, ein entsprechender Druck von außen auf das Bauteil wirkt. Das gefügte Faserverbundbauteil wird dabei so in die Vakuumeinrichtung eingebracht, dass bei Evakuierung des Faserverbundbauteils ein Umgebungsdruck auf den ersten Faserverbund-Fügepartner wirkt. Der Umgebungsdruck kann hierbei auch ein Autoklavdruck sein. Aufgrund der Tatsache, dass nunmehr auf den ersten Fügepartner ein Umgebungsdruck wirkt, kann ein automatisches Einstellen des Klebespaltes realisiert werden, da durch den erfindungsgemäßen Temperprozess der Fügepartner innerhalb des ersten Zeitraumes plastisch verformbar ist und der von außen wirkende Umgebungsdruck dazu führt, dass der erste Fügepartner aufgrund des Umgebungsdruckes plastisch verformt wird und sich somit zumindest ein gleichmäßiger Fügespalt einstellt.

Vorteilhafterweise wird zumindest in einem Randbereich des Fügespaltes ein Stützgewebe eingebracht, so dass bei einer Verformung des ersten Fügepartners die Wandstärke des Klebespaltes eingestellt und verhindert werden kann, so dass der Klebwerkstoff an der Seite des Klebespaltes entweichen kann.

Vorteilhafterweise wird während des Temperprozesses innerhalb des ersten Zeitraumes das gefügte Faserverbundbauteil weiterhin so temperiert, dass neben dem ersten Faserverbund-Fügepartner auch der Klebwerkstoff in einem Bereich um die Glasübergangstemperatur des Klebwerkstoffes getempert wird und der Klebwerkstoff so ebenfalls plastisch verformbar ist. Dies hat den Vorteil, dass bei einer plastischen Verformung des ersten Fügepartners auch der Klebwerkstoff mit verformt wird, wodurch sich eine gleichmäßige Wandstärke des Klebespaltes einstellen lässt.

In einer weiteren sehr vorteilhaften Ausführungsform schließt sich an den ersten Zeitraum ein zweiter Zeitraum des Temperprozesses an, innerhalb dessen das gefügte Faserverbundbauteil derart temperiert wird, dass die Glasübergangstemperatur des Matrixmaterials des ersten Faserverbund-Fügepartners über dem Temperatur des Temperprozesses liegt, so dass der erste Faserverbund- Fügepartner nicht mehr plastisch verformbar ist. Insbesondere wird das Faserverbundbauteil so temperiert, dass die Temperatur des Faserverbundbauteils außerhalb des Bereiches nahe der Glasübergangstemperatur, innerhalb dessen der Fügepartner plastisch verformbar ist, aber unterhalb der Glasübergangstemperatur. Dies hat den Vorteil, dass nach einer plastischen Verformung des ersten Fügepartners und einer entsprechenden Einstellung der Wandstärke des Klebespaltes dann der erste Fügepartner sich nicht mehr plastisch verformen lässt, wodurch die Form und Geometrie des ersten Fügepartners für den weiteren Temperprozess fixiert wird und sich somit nicht mehr negativ auf die Gleichmäßigkeit des Klebespaltes auswirken kann.

Dies gilt auch für den Klebwerkstoff, so dass es auch hier vorteilhaft ist, wenn sich an den ersten Zeitraum ein zweiter Zeitraum des Temperprozesses anschließt, innerhalb dessen das gefügte Faserverbundbauteil derart temperiert wird, dass die Glasübergangstemperatur des Klebwerkstoffes über der Temperatur des Temperprozesses liegt, so dass sich der Klebwerkstoff nicht mehr plastisch verformen lässt. Die Temperatur des Faserverbundbauteils wird somit so geregelt, dass die Temperatur außerhalb des Bereiches nahe der Glasübergangstemperatur liegt, aber unterhalb dieser Glasübergangstemperatur, so dass sich der Klebwerkstoff nicht mehr plastisch verformen lässt. In Kombination mit dem vorhergehend Gesagten wird somit eine anfängliche Verformbarkeit sowohl des ersten Fügepartners als auch des Klebwerkstoffes realisiert, um so einen gleichmäßigen Fügespalt einzustellen, während dann für den vorzugsweise restlichen Zeitraum bis zum Ende des Temperprozesses dann sowohl der erste Fügepartner als auch der Klebwerkstoff hinsichtlich ihrer Form und Geometrie fixiert und somit unveränderbar werden. Spätere Formabweichungen, welche die Qualität des Bauteils negativ beeinflussen, können somit verhindert werden.

Der anfängliche Vernetzungsgrad des teilvernetzten Matrixmaterials des ersten Faserverbund- Fügegrads liegt vorzugsweise zwischen 60 % und 80 %, besonders vorzugsweise zwischen 65 % und 75 %. Es hat sich dabei als vorteilhaft herausgestellt, wenn der anfängliche Vernetzungsgrad des teilvernetzten Matrixmaterials des ersten Fügepartners bei ca. 70 % liegt.

In einer weiteren vorteilhaften Ausführungsform enthält der Klebwerkstoff ein Epoxidharzmaterial bzw. eine Epoxidharzmatrix oder besteht aus einer solchen. Des Weiteren ist auch vorteilhaft, wenn das Matrixmaterial des Faserverbund-Fügepartners eine Epoxidharzmatrix enthält oder aus dieser besteht. Ganz besonders vorteilhaft ist es, wenn sowohl für den Klebwerkstoff als auch für das Matrixmaterial des ersten Fügepartners jeweils ein Material verwendet wird, das entweder gleich ist oder hinsichtlich seiner Vernetzungseigenschaften (Temperatur/Glasübergangstemperaturkurve) im Wesentlichen gleich sind oder zumindest annährend gleiche Eigenschaften aufweisen.

Die Erfindung wird anhand der beigefügten Figuren beispielhaft näher erläutert. Es zeigen:
- Figur 1: - Schematische Darstellung eines nicht-korrigierten Fügeergebnisses;
- Figur 2: - Schematische Darstellung des Fügens zweier Fügepartner gemäß der vorliegenden Erfindung;
- Figur 3: - Diagramm eines Beispielsprozesses.

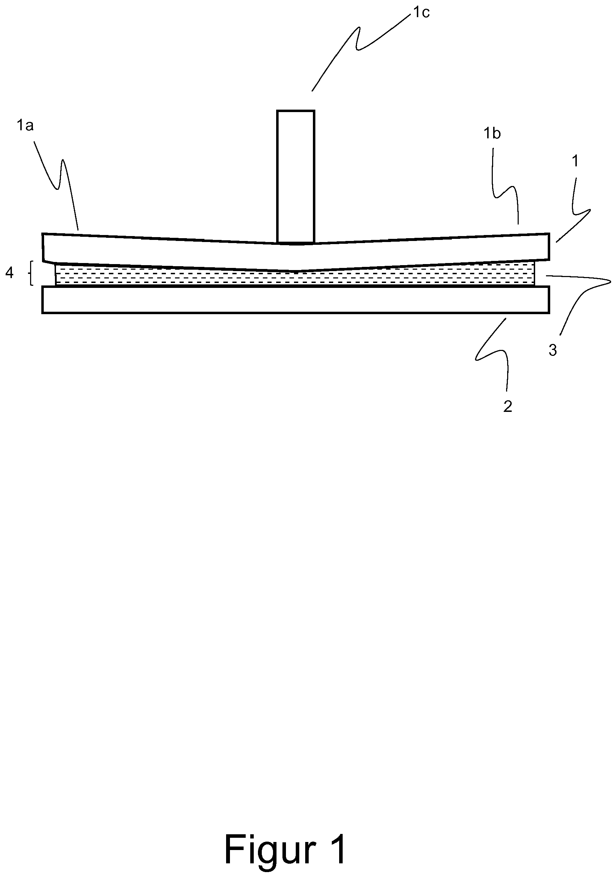

Figur 1 zeigt das Fügen zweier Fügepartner, wobei ein erster Faserverbund-Fügepartner 1 mit einen zweiten Faserverbund-Fügepartner 2 mittels einer Klebverbindung 3 in einem Fügespalt 4 verklebt werden soll.

In der Darstellung der Figur 1 ist sowohl der Fügepartner 1 als auch der Fügepartner 2 vollständig vernetzt und somit starre Bauteile, wobei der Fügepartner 1 ein T-Profil darstellt, das auf einen flächigen Fügepartner 2 mithilfe der Klebverbindung 3 aufgeklebt werden soll.

Aufgrund einer prozessinduzierten Verformung setzt der Fügepartner 1 einen nicht rechtwinkligen Verlauf zwischen den Schenkeln 1a, 1b des T-Profils und dem vertikalen Stringer 1c, so dass die beiden Schenkel 1a und 1b unter einem Winkel < 180° verlaufen. Dies führt dazu, dass der Fügespalt 4 nicht gleichmäßig ausgebildet ist, was zu Qualitätsbeeinträchtigungen führt.

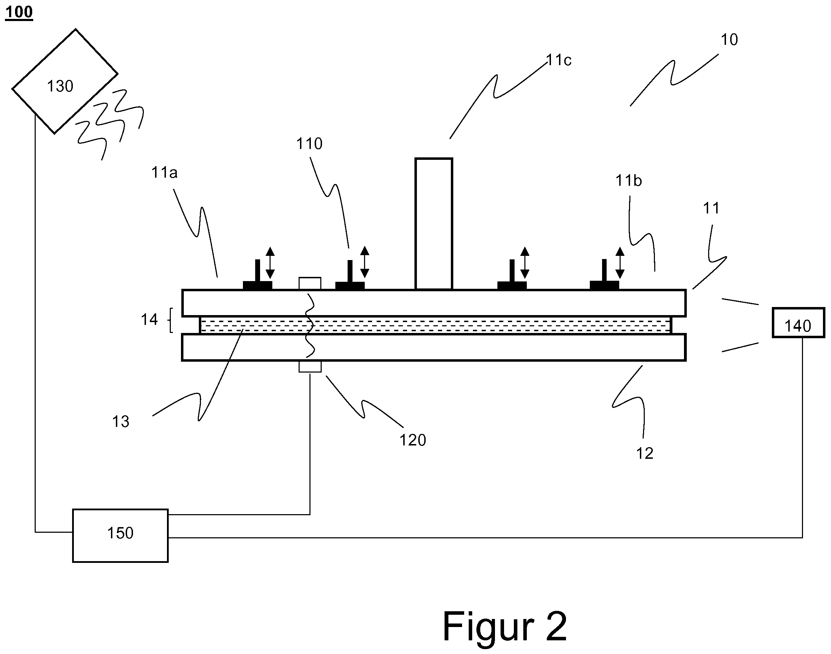

Dieses Problem überwindet die vorliegende Erfindung, wie dies in Figur 2 dargestellt ist. Mithilfe der dort dargestellten Vorrichtung 100 wird es möglich, einen ersten Faserverbund-Fügepartner 11 mit einem zweiten Faserverbund-Fügepartner 12 mittels eines Klebwerkstoffes bzw. einer Klebverbindung 13, die einen Fügespalt 14 eingebracht wird, zu verkleben bzw. zu verbinden. Der zweite Faserverbund-Fügepartner 12 ist dabei vollständig vernetzt und ausgehärtet, während der erste Faserverbund-Fügepartner 11 teilvernetzt ist. Eine vollständige Vernetzung meint hierbei zumindest einen Vernetzungsgrad von mehr als 95 %, aber vorzugsweise mehr als 99 %, während eine Teilvernetzung mindestens 60 % (vorzugsweise 65 %) und besonders vorzugsweise 70 % Vernetzungsgrad meint.

Aus dem ersten Faserverbund-Fügepartner 11 und dem zweiten Faserverbund-Fügepartner 12 sowie der dazwischenliegenden Klebverbindung bzw. des Klebwerkstoffes 13 wird somit ein gefügtes Faserverbundbauteil 10 gebildet, das mit einer Umformeinrichtung 110 an den Schenkeln 11a und 11b des ersten Faserverbund-Fügepartners verbunden wird. Des Weiteren ist ein Sensorsystem 120 vorgesehen, das mithilfe von Ultraschallsignalen den Vernetzungsgrad des Matrixmaterials des zumindest ersten Faserverbund-Fügepartners 11 ermittelt, aus dem dann die Glasübergangstemperatur ermittelbar wird.

Des Weiteren ist eine Temperiereinrichtung 130 vorgesehen, die zum Temperieren des Faserverbundbauteils 10 ausgebildet ist. Hierbei kann es sich beispielsweise um einen Ofen, integriert beispielsweise in einen Autoklaven, handeln.

Schließlich ist schematisch angedeutet noch eine Spalterfassungseinrichtung 140 vorgesehen, die ausgebildet ist, den Fügespalt 14 der Klebverbindung 13 zu erfassen, insbesondere hinsichtlich der Wandstärke bzw. hinsichtlich der Spaltstärke des Fügespaltes 14, um so einen gleichmäßigen Verlauf der Wandstärke des Fügespaltes 14 zu erreichen.

Die Verformungseinrichtung 110, das Sensorsystem 120, die Temperiereinrichtung 130 sowie die Spalterfassungseinrichtung 140 sind mit einer Auswerte- und Steuereinheit verbunden, um so aktiv in den Fügeprozess eingreifen zu können. Aus dem Sensorsystem 120 wird der Vernetzungsgrad des Matrixmaterials des ersten Faserverbund-Fügepartners 11 ermittelt, so dass basierend darauf die aktuelle Glasübergangstemperatur des Matrixmaterials des ersten Faserverbund-Fügepartners 11 ermittelt wird. Basierend darauf wird sodann die Temperiereinrichtung 130 angesteuert, um das Faserverbundbauteil 10, insbesondere den ersten Faserverbund-Fügepartner 11, derart zu temperieren, dass die Temperatur im Bereich um die ermittelte Glasübergangstemperatur liegt. Für einen gewissen ersten Zeitraum des Temperprozesses wird dabei die Temperatur durch die Temperiereinrichtung 130 so geregelt, dass diese Bedingung bezüglich der aktuell immer wieder kontinuierlich ermittelten Glasübergangstemperaturen erfüllt ist. In diesem Bereich ist der erste Faserverbund-Fügepartner 11 plastisch verformbar.

Basierend auf den Ergebnissens der Spalterfassungseinrichtung 140 wird sodann die Verformungseinrichtung 110 angesteuert, um so den ersten Faserverbund-Fügepartner 11 plastisch so zu verformen, dass eine vorgegebene Wandstärke und ggf. Gleichmäßigkeit des Fügespaltes 14 durch die plastische Verformung des ersten Faserverbund-Fügepartners 11 eingestellt wird. Hierdurch kann erreicht werden, dass die Wandstärke immer gleichmäßig während des gesamten Füge- und Aushärteprozesses bestehen bleibt, wodurch mithilfe einer derartigen Vorrichtung auf den Parameter der Wandstärke des Fügespaltes 14 während des Temperprozesses Einfluss genommen werden kann.

Alternativ ist es denkbar, dass das Faserverbundbauteil 10 in eine Vakuumeinrichtung, beispielsweise einen Foliensack, eingebracht wird und anschließend das gesamte Bauteil 10 evakuiert wird, wodurch sich in dem Foliensack ein Vakuum einstellt. Bei einem Faserverbundbauteil, wie in Figur 2 dargestellt, würde nun der Umgebungsdruck dazu führen, dass eine Kraft auf die Schenkel 11a, 11b ausgeübt wird, wodurch ebenfalls eine gleichmäßige Wandstärke des Fügespaltes 14 eingestellt werden kann, wenn der erste Faserverbund-Fügepartner 11 in einen Bereich um seine aktuelle Glasübergangstemperatur temperiert wird. Hierdurch ergibt sich der Vorteil, dass eine Gleichmäßigkeit des Fügespaltes ohne äußere Einflüsse allein basierend auf dem Umgebungsdruck realisiert werden kann. Einer Umformeinrichtung 110, wie in Figur 2 dargestellt, bedarf es da nicht.

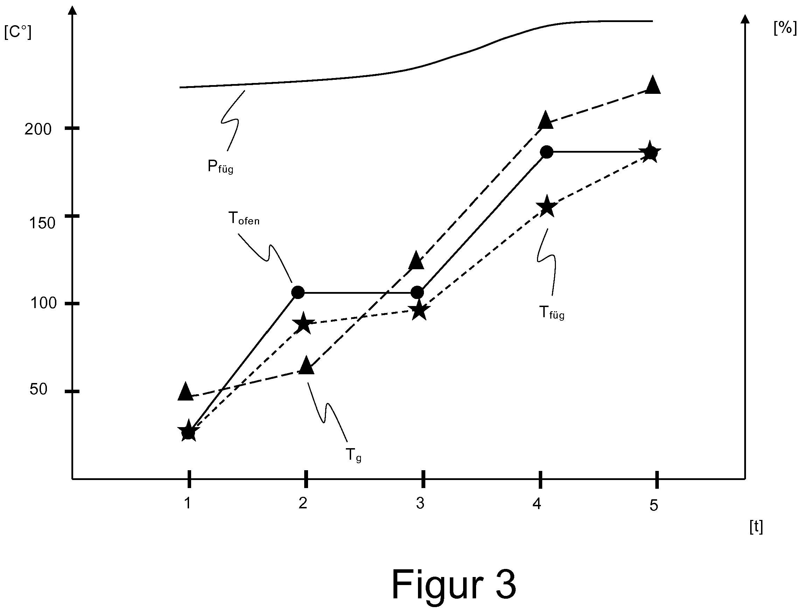

Figur 3 zeigt schließlich ein Diagramm zur Veranschaulichung der Korrelation zwischen dem zeitlichen Fortschritt des Temperprozesses (X-Achse) und der Temperatur sowie des Aushärtungsgrades (Y-Achse). Der mit Tofen bezeichnete Diagrammverlauf kennzeichnet dabei den Temperaturverlauf über die fünf Prozessschritte T₁ bis T₅ zur Temperierung des Faserverbundbauteils. Wie zu erkennen ist, beginnt die Temperaturkurve beim Zeitpunkt T₁ bei etwa 25° C und steigt dann bis zum Prozessschritt T₂ auf etwa 100° C an. Bis zum Prozessschritt T₃ verbleibt sie dann auf etwa 100° C, um dann bis zum Prozessschritt T₄ auf die Endtemperatur von 175° C anzusteigen.

Die mit T_{Füg} gekennzeichnete Temperaturkurve ist dabei eine Abschätzung der Bauteiltemperatur des ersten Faserverbund-Fügepartners. Dieser Temperaturverlauf nährt sich dem Temperaturverlauf T_{Ofen} der Temperiereinrichtung an und bleibt aufgrund der Trägheit des Gesamtsystems hinter der Temperaturkurve Toten der Temperiereinrichtung zurück.

Die Temperaturkurve T_{G} zeigt schließlich die Veränderung der Glasübergangstemperatur des ersten Faserverbund-Fügepartners. Die Glasübergangstemperatur korreliert dabei mit dem Vernetzungsgrad, der durch den Verlauf P_{Füg} (P steht für Polymerisation) des ersten Fügepartners angezeigt wird. Anfänglich, d.h. im Prozessschritt T₁ befindet sich die Glasübergangstemperatur bei ca. 50° C und liegt oberhalb der Temperatur des ersten Fügepartners. Durch Temperierung des ersten Fügepartners schreitet die Vernetzungsreaktion weiter an, wodurch die Glasübergangstemperatur weiter ansteigt und im Prozessschritt T₂ bei ca. 75° C liegt. Zu diesem Zeitpunkt liegt die Temperatur des Faserverbundbauteils leicht oberhalb der Glasübergangstemperatur, wodurch zum Prozessschritt T₂ der erste Fügepartner plastisch verformbar ist. Die plastische Verformbarkeit beginnt dabei zwischen dem ersten T₁ und zweiten T₂ Prozessschritt und endet spätestens bei dem dritten Prozessschritt, bei dem aufgrund der weiterführenden Vernetzung die Glasübergangstemperatur wieder über der Bauteiltemperatur liegt und die Bauteiltemperatur die Glasübergangstemperatur auch nicht mehr sowie annähert, dass eine plastische Verformbarkeit erreicht wird.

### Bezugszeichenliste

- 1: - starrer erster Fügepartner
- 2: - starrer zweiter Fügepartner
- 3: - Klebwerkstoff/Klebverbindung
- 4: - Fügespalt
- 10: - gefügtes Faserverbundbauteil
- 11: - teilvernetzter erster Fügepartner
- 12: - vollvernetzter zweiter Fügepartner
- 13: - Klebwerkstoff/Klebverbindung
- 14: - Fügespalt
- 100: - Vorrichtung
- 110: - Verformungseinrichtung
- 120: - Sensorsystem
- 130: - Temperiereinrichtung
- 140: - Spalterfassungseinrichtung
- 150: - Auswerte- und Steuereinheit
- T_{Ofen}: - Temperaturverlauf Temperiereinrichtung
- T_{Füg}: - Temperaturverlauf Fügepartner
- T_{G}: - Temperaturverlauf Glasübergangstemperatur
- P_{Füg}: - Verlauf des Vernetzungsgrades

## Patentansprüche

1. Verfahren zum Fügen eines ersten Faserverbund-Fügepartner (1) an wenigstens einen zweiten Faserverbund-Fügepartner (2) mittels einer Klebverbindung (3), wobei der erste und der zweite Faserverbund-Fügepartner einen Faserverbundwerkstoff aufweisen oder aus einem solchen bestehen und die Klebverbindung (3) durch einen unter Temperaturbeaufschlagung vernetzbaren Klebwerkstoff (3) gebildet wird, mit den Schritten:
- Bereitstellen der Faserverbund-Fügepartner, wobei bei zumindest dem ersten Faserverbund-Fügepartner (1) das Matrixmaterial des Faserverbundwerkstoff teilvernetzt ist,
- Einbringen des Klebwerkstoffes (3) in einen Fügespalt (4) zwischen den Faserverbund-Fügepartnern, und
- Tempern des aus den Faserverbund-Fügepartnern und dem Klebwerkstoff (3) gebildeten Faserverbundbauteils durch Temperierung mittels einer Temperiereinrichtung (130), um zumindest das Matrixmaterial des ersten Faserverbund-Fügepartners (1) und den Klebwerkstoff (3) vollständig zu vernetzen, wobei
für einen ersten Zeitraum das gefügte Faserverbundbauteil in einem Bereich um die aktuelle Glasübergangstemperatur derart temperiert wird, dass der erste Faserverbund-Fügepartner plastisch verformbar wird, **dadurch gekennzeichnet, dass** während des Temperprozesses
- der Vernetzungsgrad des Matrixmaterials zumindest des ersten Faserverbund-Fügepartner (1) mittels eines Sensorsystems (120) erfasst und aus dem momentanen Vernetzungsgrad die aktuelle Glasübergangstemperatur des Matrixmaterials bestimmt wird, und
- wobei innerhalb des ersten Zeitraumes der erste Faserverbund-Fügepartner (1) zur Einstellung einer vorgegebenen Stärke und ggf. Gleichmäßigkeit des Fügespaltes (4) plastisch verformt wird.

2. Verfahren nach Anspruch 1, **dadurch gekennzeichnet, dass** der erste Faserverbund-Fügepartner (11), dessen Matrixmaterial anfänglich teilvernetzt war, mit einer Verformungseinrichtung (110) verbunden ist, wobei während des Temperprozesses innerhalb des ersten Zeitraumes mittels einer Spalterfassungsvorrichtung (140) die Stärke des Fügespaltes (14) erfasst und der erste Faserverbund-Fügepartner (11) mittels der verbundenen Verformungseinrichtung (110) derart plastisch verformt wird, dass eine vorgegebene Stärke und ggf. Gleichmäßigkeit des Fügespaltes (14) eingestellt wird.

3. Verfahren nach Anspruch 1 oder 2, **dadurch gekennzeichnet, dass** das gefügte Faserverbundbauteil (10) in eine Vakuumeinrichtung eingebracht und mittels einer Drucksenke evakuiert wird, wobei das gefügte Faserverbundbauteil (10) so in die Vakuumeinrichtung eingebracht wird, dass bei Evakuierung des Faserverbundbauteils (10) ein Umgebungsdruck auf den ersten Faserverbund-Fügepartner (11)wirkt.

4. Verfahren nach einem der vorhergehenden Ansprüche, **dadurch gekennzeichnet, dass** in einem Randbereich des Fügespaltes (14) ein Stützgewebe eingebracht wird.

5. Verfahren nach einem der vorhergehenden Ansprüche, **dadurch gekennzeichnet, dass** während des Temperprozesses innerhalb des ersten Zeitraumes das gefügte Faserverbundbauteil (10) weiterhin so temperiert wird, dass neben dem ersten Faserverbund-Fügepartner (11) auch der Klebwerkstoff (13) in einem Bereich um die Glasübergangstemperatur des Klebwerkstoffes (13) getempert wird und der Klebwerkstoff (13) so plastisch verformbar ist.

6. Verfahren nach einem der vorhergehenden Ansprüche, **dadurch gekennzeichnet, dass** sich an den ersten Zeitraum ein zweiter Zeitraum des Temperprozesses anschließt, innerhalb dessen das gefügte Faserverbundbauteil (10) derart temperiert wird, dass die Glasübergangstemperatur des Matrixmaterials des ersten Faserverbund-Fügepartners (11) über der Temperatur des Temperprozesses liegt, so dass der erste Faserverbund-Fügepartner (11) nicht mehr plastisch verformbar ist.

7. Verfahren nach einem der vorhergehenden Ansprüche, **dadurch gekennzeichnet, dass dadurch gekennzeichnet, dass** sich an den ersten Zeitraum ein zweiter Zeitraum des Temperprozesses anschließt, innerhalb dessen das gefügte Faserverbundbauteil (10) derart temperiert wird, dass die Glasübergangstemperatur des Klebwerkstoffes (13) über der Temperatur des Temperprozesses liegt, so dass der Klebwerkstoff (13) nicht mehr plastisch verformbar ist.

8. Verfahren nach Anspruch 7, **dadurch gekennzeichnet, dass** der zweite Zeitraum mit dem Ende des Temperprozesses endet, an dem das Matrixmaterial des ersten Faserverbund-Fügepartner (11) und der Klebwerkstoff (13) vollständig vernetzt sind.

9. Verfahren nach einem der vorhergehenden Ansprüche, **dadurch gekennzeichnet, dass** das teilvernetzte Matrixmaterial des ersten Faserverbund-Fügepartners (11) einen anfänglichen Vernetzungsgrad zwischen 60% und 80%, vorzugsweise zwischen 65% und 75% hat.

10. Verfahren nach einem der vorhergehenden Ansprüche, **dadurch gekennzeichnet, dass** der Klebwerkstoff (13) eine Epoxidharzmatrix enthält oder aus dieser besteht und/oder dass das Matrixmaterial des ersten Faserverbund-Fügepartners (11) eine Epoxidharzmatrix enthält oder aus dieser besteht.

11. Verfahren nach einem der vorhergehenden Ansprüche, **dadurch gekennzeichnet, dass** das Matrixmaterial des zweiten Faserverbund-Fügepartners (12) vollständig vernetzt ist.

## Claims

1. Method for the joining of a first fibre composite joining partner (1) to at least one second fibre composite joining partner (2) by means of an adhesively bonded joint (3), wherein
the first and the second fibre composite joining partners have a fibre composite material, or consist of such a fibre composite material, and the adhesively bonded joint (3) is formed by an adhesive material (3) that can be cross-linked under the action of temperature, with the steps:
- Preparation of the fibre composite joining partners, wherein
in the case of at least the first fibre composite joining partner (1), the matrix material of the fibre composite material is partially cross-linked,
- Introduction of the adhesive material (3) into a joint gap (4) between the fibre composite joining partners, and
- Tempering of the fibre composite component formed from the fibre composite joining partners and the adhesive material (3), by means of tempering using a tempering device (130), so as to fully cross-link at least the matrix material of the first fibre composite joining partner (1) and the adhesive material (3), wherein
for a first time period, the joined fibre composite component is tempered in a range about the current glass transition temperature such that the first fibre composite joining partner becomes plastically deformable,
**characterized in that**,
during the tempering process
- The degree of cross-linkage of the matrix material of at least the first fibre composite joining partner (1) is detected by means of a sensor system (120), and the current glass transition temperature of the matrix material is determined from the current degree of cross-linkage, and wherein
- Within the first time period the first fibre composite joining partner (1) is plastically deformed so as to configure a predefined thickness and, if necessary, a predefined uniformity of the joint gap (4).

2. Method in accordance with Claim 1,
**characterized in that**,
the first fibre composite joining partner (11), the matrix material of which was initially partially cross-linked, is connected to a deformation device (110), wherein
during the tempering process, within the first time period, the thickness of the joint gap (14) is detected by means of a gap detection device (140) and the first fibre composite joining partner (11) is plastically deformed by means of the connected deformation device (110), such that a predefined thickness and, if necessary, a predefined uniformity of the joint gap (14) is configured.

3. Method in accordance with Claim 1 or 2,
**characterized in that**,
the joined fibre composite component (10) is introduced into a vacuum device and evacuated by means of a pressure sink, wherein
the joined fibre composite component (10) is introduced into the vacuum device such that an ambient pressure acts on the first fibre composite joining partner (11) when the fibre composite component (10) is evacuated.

4. Method in accordance with one of the preceding claims,
**characterized in that**,
a supporting fabric is introduced into an edge region of the joint gap (14).

5. Method in accordance with one of the preceding claims,
**characterized in that**,
during the tempering process, within the first time period, the joined fibre composite component (10) is further tempered such that, in addition to the first fibre composite joining partner (11), the adhesive material (13) is also tempered in a range about the glass transition temperature of the adhesive material (13), and the adhesive material (13) is thus plastically deformable.

6. Method in accordance with one of the preceding claims,
**characterized in that**,
the first time period is followed by a second time period of the tempering process, within which the joined fibre composite component (10) is tempered such that the glass transition temperature of the matrix material of the first fibre composite joining partner (11) lies above the temperature of the tempering process, such that the first fibre composite joining partner (11) is no longer plastically deformable.

7. Method in accordance with one of the preceding claims,
**characterized in that**,
the first period is followed by a second period of the tempering process, within which the joined fibre composite component (10) is tempered such that the glass transition temperature of the adhesive material (13) lies above the temperature of the tempering process, such that the adhesive material (13) is no longer plastically deformable.

8. Method in accordance with Claim 7,
**characterized in that**,
the second time period ends at the end of the tempering process, at which point the matrix material of the first fibre composite joining partner (11) and the adhesive material (13) are fully cross-linked.

9. Method in accordance with one of the preceding claims,
**characterized in that**,
the partially cross-linked matrix material of the first fibre composite joining partner (11) has an initial degree of cross-linkage between 60% and 80%, preferably between 65% and 75%.

10. Method in accordance with one of the preceding claims,
**characterized in that**,
the adhesive material (13) contains or consists of an epoxy resin matrix,
and/or **in that**,
the matrix material of the first fibre composite joining partner (11) contains or consists of an epoxy resin matrix.

11. Method in accordance with one of the preceding claims,
**characterized in that**,
the matrix material of the second fibre composite joining partner (12) is fully cross-linked.

## Revendications

1. Procédé d'assemblage d'une première pièce à joindre en composite chargé de fibres (1) à au moins une deuxième pièce à joindre en composite chargé de fibres (2) au moyen d'un assemblage collé (3), dans lequel la première et la deuxième pièces à joindre en composite chargé de fibres présentent un matériau composite chargé de fibres ou s'en composent et on forme l'assemblage collé (3) au moyen d'un matériau adhésif (3) réticulable par une exposition à la température, comprenant les étapes suivantes:
- préparer les pièces à joindre en composite chargé de fibres, dans lequel le matériau de matrice du matériau composite chargé de fibres est partiellement réticulé dans au moins la première pièce à joindre en composite chargé de fibres (1),
- introduire le matériau adhésif (3) dans une fente de jonction (4) entre les pièces à joindre en composite chargé de fibres, et
- égaliser la température du composant en composite chargé de fibres formé par les pièces à joindre en composite chargé de fibres et le matériau adhésif (3) par égalisation de la température au moyen d'un dispositif d'égalisation de la température (30), afin de réticuler entièrement au moins le matériau de matrice de la première pièce à joindre en composite chargé de fibres (1) et le matériau adhésif (3),
dans lequel pendant un premier intervalle de temps on égalise la température du composant composite chargé de fibres assemblé dans une plage proche de la température de transition vitreuse actuelle, de telle manière que la première pièce à joindre en composite chargé de fibres soit déformable plastiquement,
**caractérisé en ce que** pendant le processus d'égalisation de la température
- on détecte le degré de réticulation du matériau de matrice au moins de la première pièce à joindre en composite chargé de fibres (1) au moyen d'un système de capteur (120) et on détermine à partir du degré de réticulation instantané la température de transition vitreuse actuelle du matériau de matrice, et
- dans lequel on déforme plastiquement, à l'intérieur du premier intervalle de temps, la première pièce à joindre en composite chargé de fibres (1) pour le réglage d'une épaisseur et éventuellement d'une uniformité prédéterminée(s) de la fente de jonction (4) .

2. Procédé selon la revendication 1, **caractérisé en ce que** la première pièce à joindre en composite chargé de fibres (11), dont le matériau de matrice était au début partiellement réticulé, est reliée à un dispositif de déformation (110), dans lequel on détecte pendant le processus d'égalisation de la température à l'intérieur du premier intervalle de temps l'épaisseur de la fente de jonction (14) au moyen d'un dispositif de détection de fente (140) et on déforme plastiquement la première pièce à joindre en composite chargé de fibres (11) au moyen du dispositif de déformation relié (110), de telle manière qu'une épaisseur et éventuellement une uniformité prédéterminée(s) de la fente de jonction (14) soit/soient réglée(s).

3. Procédé selon une revendication 1 ou 2, **caractérisé en ce que** l'on introduit le composant en composite chargé de fibres assemblé (10) dans un dispositif sous vide et on le met sous vide au moyen d'un puits de pression, dans lequel on introduit le composant en composite chargé de fibres assemblé (10) dans le dispositif sous vide de telle manière que lors de la mise sous vide du composant en composite chargé de fibres (10) une pression ambiante agisse sur la première pièce à joindre en composite chargé de fibres (11).

4. Procédé selon l'une quelconque des revendications précédentes, **caractérisé en ce que** l'on introduit un tissu d'appui dans une région de bord de la fente de jonction (14).

5. Procédé selon l'une quelconque des revendications précédentes, **caractérisé en ce que** pendant le processus d'égalisation de la température à l'intérieur du premier intervalle de temps on égalise en outre la température du composant en composite chargé de fibres assemblé (10) de telle manière qu'en plus de la première pièce à joindre en composite chargé de fibres (11) on égalise également la température du matériau adhésif (13) dans une plage proche de la température de transition vitreuse du matériau adhésif (13) et que le matériau adhésif (13) soit de ce fait déformable plastiquement.

6. Procédé selon l'une quelconque des revendications précédentes, **caractérisé en ce qu'**au premier intervalle de temps succède un second intervalle de temps du processus d'égalisation de la température, à l'intérieur duquel on égalise la température du composant en composite chargé de fibres assemblé (10), de telle manière que la température de transition vitreuse du matériau de matrice de la première pièce à joindre en composite chargé de fibres (11) se situe au-dessus de la température du processus d'égalisation de la température, de telle manière que la première pièce à joindre en composite chargé de fibres (11) ne soit plus déformable plastiquement.

7. Procédé selon l'une quelconque des revendications précédentes, **caractérisé en ce qu'**au premier intervalle de temps succède un second intervalle de temps du processus d'égalisation de la température, à l'intérieur duquel on égalise la température du composant en composite chargé de fibres assemblé (10) de telle manière que la température de transition vitreuse du matériau adhésif (13) se situe au-dessus de la température du processus d'égalisation de la température, de telle manière que le matériau adhésif (13) ne soit plus déformable plastiquement.

8. Procédé selon la revendication 7, **caractérisé en ce que** le second intervalle de temps prend fin à la fin du processus d'égalisation de la température, à laquelle le matériau de matrice de la première pièce à joindre en composite chargé de fibres (11) et le matériau adhésif (13) sont entièrement réticulés.

9. Procédé selon l'une quelconque des revendications précédentes, **caractérisé en ce que** le matériau de matrice partiellement réticulé de la première pièce à joindre en composite chargé de fibres (11) a un degré de réticulation initial compris entre 60 % et 80 %, de préférence entre 65 % et 75 %.

10. Procédé selon l'une quelconque des revendications précédentes, **caractérisé en ce que** le matériau adhésif (13) contient une matrice en résine époxy ou se compose de celle-ci et/ou **en ce que** le matériau de matrice de la première pièce à joindre en composite chargé de fibres (11) contient une matrice en résine époxy ou se compose de celle-ci.

11. Procédé selon l'une quelconque des revendications précédentes, **caractérisé en ce que** le matériau de matrice de la deuxième pièce à joindre en composite chargé de fibres (12) est entièrement réticulé.
